# EUROPEAN PATENT APPLICATION

(11) **EP 1 645 385 A1**
(43) Date of publication of application: **12.04.2006**
(21) Application number: 04425761.6
(22) Date of filing: 11.10.2004
(51) Int. Cl.: B29C 44/12, B29C 45/26

(54) **Method and system for producing a foamed article**

(71) Applicant: Tecnocad Progetti Spa, 10135 Torino (IT)
(72) Inventor: Cini, Germano, Tecnocad Progetti Spa, 10135 Torino (IT)
(74) Representative: Marchitelli, Mauro

(57) **Abstract**

A method and system for producing a foamed article (46) including a support element (54) made of rigid plastic material, a coating layer (56) and a layer of foamed plastic material (58) positioned between the coating layer (56) and the support element (54). The system comprises a first and a second half-mould (12,14) provided with respective active surfaces (16,18) and movable relative to each other along a direction of opening/closing. One of said half-moulds (14) comprises a cavity (72) for collecting the excess foamed material that escapes from a controlled exit region (64) defined at an outer edge of the support element (54). The half-mould (14) provided with said cavity (72) is provided with a permanent coating (74) of anti-adhesive material at least at said cavity (72).

## Description

The present invention relates to a method and system for producing a foamed article.

Many foamed articles, such as some dashboards for vehicles, comprise a support element made of rigid plastic material, a coating layer (for instance made of imitation leather or the like), and a layer of foamed plastic material interposed between the coating layer and the support element made of rigid plastic material. The production of articles of this kind is effected using a foaming mould including a first and a second half-mould, movable relative to each other along a direction of opening/closing and provided with respective active surfaces. The support element and the coating layer are positioned against respective active surfaces of the two half-moulds. In the closed position of the two half-moulds at least one foaming chamber is defined between the coating layer and the rigid support element.

In prior art solutions there is the problem of the escape of excess foamed plastic material which positions itself between the support element made of rigid plastic material and the active surface of the half-mould which bears the rigid support element. To prevent the adhesion of foamed plastic material to said half-mould, a detaching material is sprayed before each new moulding cycle.

The object of the present invention is to provide a method and a system for producing a foamed article which allows to overcome the problems of the prior art.

According to the present invention, said object is achieved by a device and by a system having the characteristics set out in the claims.

The present invention shall now be described in detail with reference to the accompanying drawings, provided purely by way of non limiting example, in which:
- Figure 1 is a schematic section view showing a moulding system according to the present invention in working position,
- Figure 2 is a schematic section view showing the moulding system of Figure 1 at the end of the moulding phase,
- Figure 3 is an enlarged detail of the part designated by the arrow III in Figure 1,
- Figure 4 shows the detail of Figure 3 during the opening of the half-moulds, and
- Figure 5 is a detail in enlarged scale of the part designated by the arrow V in Figure 2.

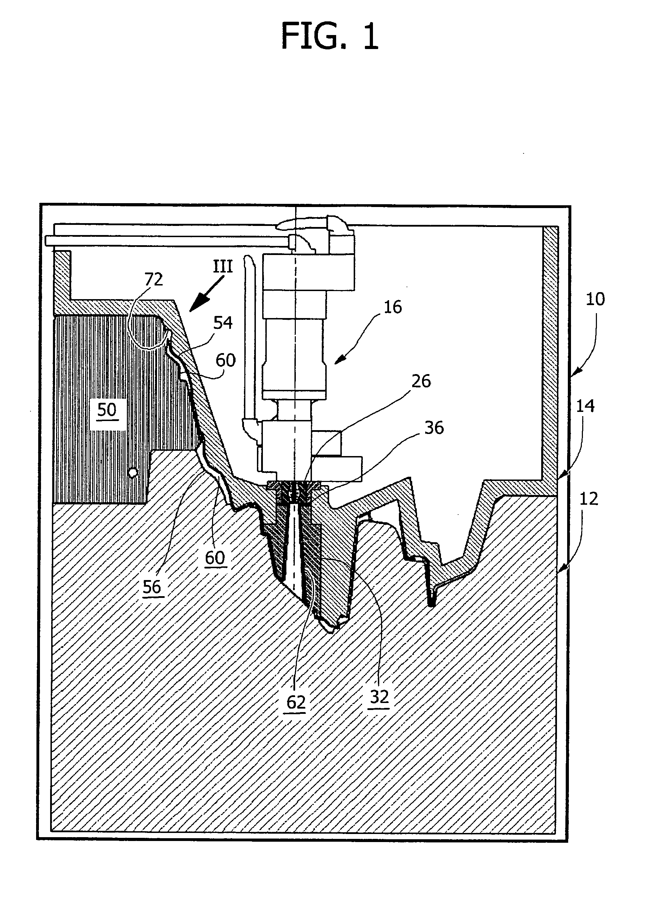

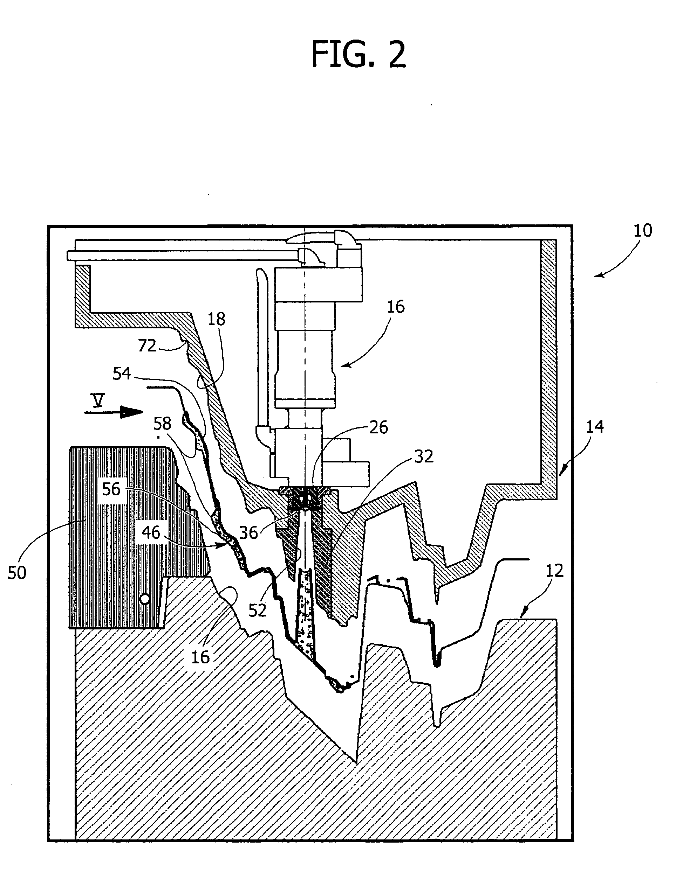

With reference to Figures 1 and 2, the number 10 designates a moulding system according to the present invention. The moulding system 10 comprises a lower half-mould 12 or die and an upper half-mould 14 or punch. The lower half-mould 14 is movable relative to the lower half-mould 12 along a vertical direction of opening/closing.

Figures 1 and 2 show the moulding system 10 respectively in closed position and in open position. The half-moulds 12, 14 are provided with respective active surfaces 16, 18. The active surface 16 of the lower half-mould 12 partly extends on a horizontally movable carriage 50 able to facilitate the extraction of the finished article.

The upper half-mould 14 bears an injection head 16 which communicates with a nozzle 26. The nozzle 26 is located at the upper end of a channel 52 with cone frustum shape formed in an injection bushing 32 fastened to the upper half-mould 14. A sealing gasket 36 is positioned between the injection bushing 32 and the nozzle 26.

With reference to Figure 2, the moulding system 10 is destined to produce an article 46 formed by a support element 54 made of rigid plastic material, a coating layer 56 and a layer of foamed plastic material 58 interposed between the coating layer 56 and the support element 54.

In operation, the coating layer 56 is applied on the active surface 16 of the lower half-mould 12. The support element 54 of rigid plastic material, previously obtained by injection moulding, is applied and held on the active surface 18 of the upper half-mould 14. Then, the two half-moulds 12, 14 are closed as shown in Figure 1. Between the coating layer 56 and the support element 54 is defined at least one foaming chamber 60. The support element 54 has an integral extension 62 which is inserted in the channel 52 of the injection bushing 32. The upper end of the integral extension bears against the gasket 36. The nozzle 26 directly communicates with the inner volume of the integral extension 62.

In the closed position shown in Figure 1, the injection head 16 injects foamable material through the nozzle 26. The plastic foamable material reaches the foaming chambers 60 through the hole of the integral extension 62.

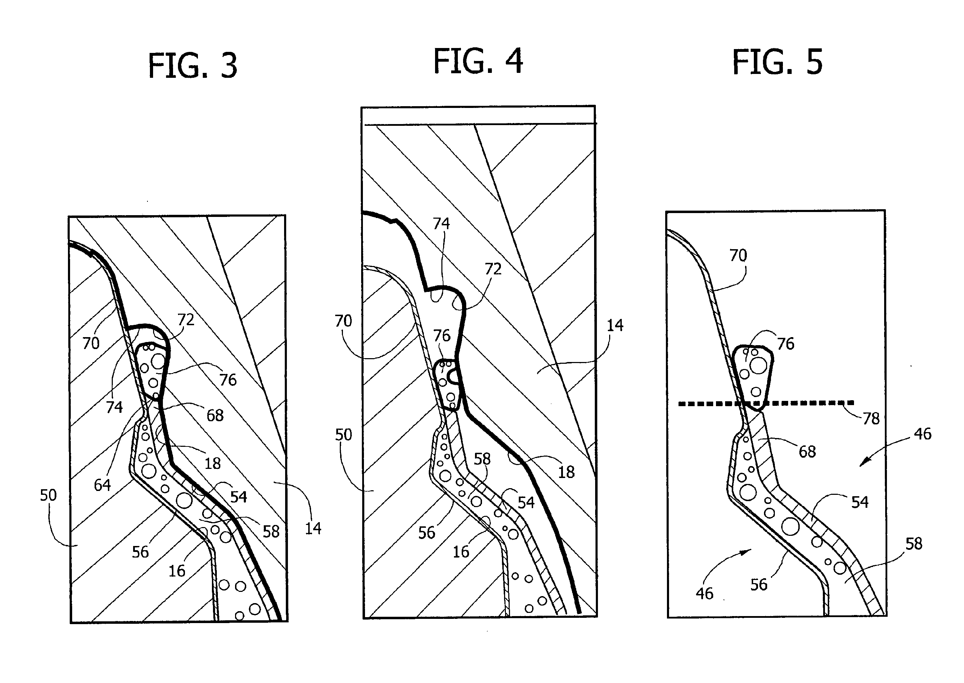

With reference in particular to Figure 3, along at least one part of the peripheral edge of the support element 54 is formed an area 64 for the controlled exit of excess foamed material. The region 64 is defined by the contact region of the peripheral edge 68 of the rigid support element 54 with the surface of the coating layer 56. The coating layer 56 has an outer portion 70 which extends laterally beyond the outer edge of the rigid support element 54.

On the active surface 18 of the upper half-mould 14 is formed a cavity 72 situated at the region 64 for the controlled exit of excess foamed material. The active surface 18 of the upper half-mould 14 has a permanent layer of anti-adhesive material 74 at least at the cavity 72 for collecting excess foam. The anti-adhesive layer 74 can be constituted by a fluorocarbon resin with thickness ranging between 0.1 and 0.4 mm. The anti-adhesive material 74 can also be provided on the whole active surface 18 of the upper half-mould 14. On the active surface 16 of the lower half-mould 12, the layer of anti-adhesive material is not provided even at the cavity 72 because the whole active surface 16 of the lower half-mould 12 is covered by the coating layer 56 and never comes in direct contact with the foamable material.

As shown in Figures 3 and 4, the excess foamed material that escapes through the controlled exit region 64 is collected into the cavity 72 and forms a bead of foamed material 76 adhering to the edge 68 of the rigid support element 54 and to the outer portion 70 of the coating layer 56.

After the opening of the mould (Figure 4) the bead 76 of foamed material is easily detached from the active surface 18 of the upper half-mould 14 and without leaving any traces thanks to the presence of the layer of anti-adhesive material 74.

After extracting the finished article, a cutting operation is performed along the edge of the rigid support element 54, as schematically indicated by the dashed line 78 in Figure 5. With this cutting operation, the outer part 70 of the coating layer 56 and the bead 76 of excess foamed material are removed from the finished article 46.

Providing a region for the controlled escape of foamed plastic material and a cavity for the collection of the foamed material prevents uncontrolled releases of the excess foamed material. In this way, all the excess foamed material collects in the cavity 72 and forms the bead 76 which is easily detached from the mould and removed with the cutting operation. Therefore, the excess foamed material is prevented from inserting itself between the rigid support element 54 and the active surface 18 of the upper half-mould 14 and a perfect cleaning of the half-mould is obtained. Moreover, the application of detaching material on the active surface of the upper half-mould before each moulding cycle is avoided.

## Claims

1. A method for producing an article (46) including a support element (54) made of rigid plastic material, a coating layer (56) and a layer of foamed plastic material (58) positioned between the coating layer (56) and the support element (54), the method comprising the steps of:
- providing a foaming mould (10) including a first and a second half-moulds (12, 14), having respective active surfaces (16, 18) and movable relative to each other along a direction of opening/closing,
- applying the coating layer (56) on the active surface (16) of the first half-mould (12) and applying the support element (54) on the active surface (18) of the second half-mould (14),
- closing the half-moulds (12, 14) and defining at least one foaming chamber (60) between the coating layer (56) and the support element (54), and
- injecting foamable plastic material into said foaming chamber (60),
**characterised in that** it further comprises the steps of:
- making excess foamed plastic material escape from a controlled exit region (64) situated at the outer peripheral edge of the support element (54), and
- collecting the excess foamed material (76) in a collecting cavity (72) situated at said controlled exit region (64), and
- providing a permanent layer of anti-adhesive material (74) at least at said collecting cavity (72).

2. Method as claimed in claim 1, **characterised in that** it comprises the step of cutting a bead (76) of excess foamed material at the outer edge of the support element (54).

3. A system for producing an article (46) including a support element (54) made of rigid plastic material, a coating layer (56) and a layer of foamed plastic material (58) positioned between the coating layer (56) and the support element (54), comprising a first and a second half-mould (12, 14) provided with respective active surfaces (16, 18) and movable relative to each other along a direction of opening/closing, **characterised in that** one of said half-moulds (14) comprises a cavity (72) for collecting excess foamed material which escapes from a controlled exit region (64) defined at an outer edge of the support element (54) and **in that** the half-mould (14) provided with said cavity (72) is provided with a permanent coating (74) of anti-adhesive material at least in correspondence with said cavity (72).
